# FASCICULE DE BREVET EUROPEEN

(11) **EP 3 848 934 B1**
(45) Date de publication et mention de la délivrance du brevet: **01.01.2025**
(21) Numéro de dépôt: 20214015.8
(22) Date de dépôt: 15.12.2020
(51) Int. Cl.: G11C 29/34, G11C 5/00, G11C 29/00, G11C 29/12, G11C 29/16, G11C 29/24, G11C 29/46, G11C 29/52, H03K 19/23, G11C 29/04, G11C 29/20, H03K 3/037

(54) **REGISTRE À TRIPLICATION COMPORTANT UN DISPOSITIF DE SÉCURISATION**
DREIFACHREGISTER MIT EINER SICHERHEITSVORRICHTUNG
REGISTER WITH TRIPLICATION COMPRISING A SECURING DEVICE

(30) Priorité: 17.12.2019 FR 1914564
(43) Date de publication de la demande: 14.07.2021
(73) Titulaire: THALES, 92190 Meudon (FR)
(72) Inventeur: DERVIN, Patrick, 33700 Merignac (FR); CAUDOUX, Frédéric, 33700 Merignac (FR); MURZEAU, Jean, 33700 Merignac (FR)
(74) Mandataire: Atout PI Laplace

(56) Documents cités:
- WO-A1-2014/052936
- CN-A- 103 198 868
- US-A1- 2004 124 876
- US-A1- 2018 165 153

## Description

L'invention se situe dans le domaine de la protection et de la sécurisation de registres électroniques embarqués sur aéronefs destinés à évoluer à des altitudes de navigation aérienne.

En haute altitude, les composants électroniques sont exposés aux particules à haute énergie. Ces particules sont typiquement des neutrons. Ces particules peuvent affecter le fonctionnement des circuits électroniques. A titre d'exemple, ces particules peuvent faire changer l'état d'une bascule ou d'un registre.

Dans le domaine aéronautique, le bon fonctionnement des équipements électroniques est fondamental pour assurer la sécurité de l'appareil, de son équipage et de ses passagers. Or, l'évolution des technologies électroniques qui tend vers une plus grande miniaturisation des composants électroniques les rend de plus en plus sensibles à ce type de perturbations.

Pour pallier cet inconvénient important, des solutions techniques ont été mises en place pour protéger les composants les plus critiques. Par exemple, les registres les plus critiques des circuits à logique programmable, connus sous l'acronyme « PLD », signifiant « Programmable Logic Device »sont protégés par des mécanismes qui les rendent robustes aux altérations de ces particules.

Classiquement, on considère qu'une même particule ne peut altérer qu'une seule bascule d'un PLD, contrairement aux mémoires de type « RAM » où une seule particule peut éventuellement altérer plusieurs bits.

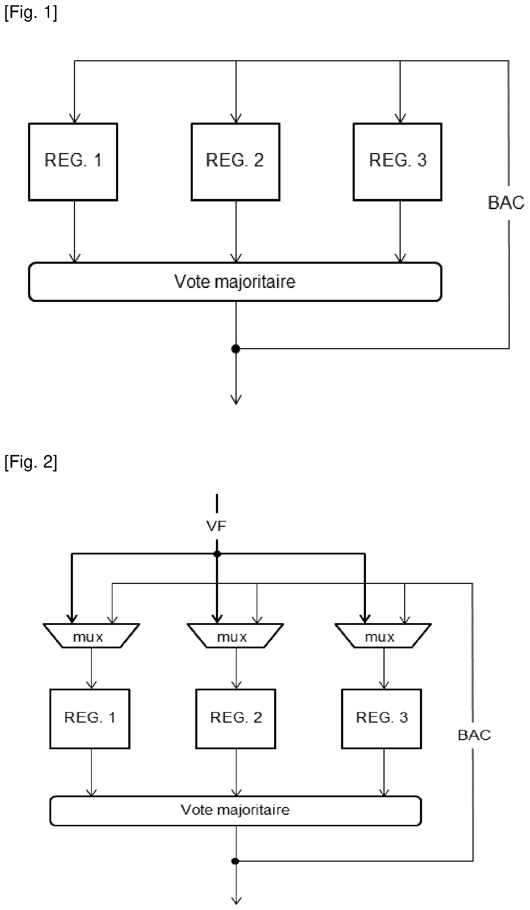

A partir de cette hypothèse, une méthode très répandue pour protéger un registre est la triplication. Elle est décrite sur les figures 1 et 2. La figure 1 représente le principe du vote majoritaire, la figure 2 représente le fonctionnement complet des registres.

Son principe est le suivant. Une même information est stockée dans trois registres différents qui sont notés REG. 1, REG. 2 et REG. 3 sur les figures 1 et 2. Ces registres ne sont accessibles qu'en écriture.

Une équation de type « vote majoritaire » permet de reconstituer la bonne information si un et un seul des trois registres est altéré, ce qui est le cas le plus probable. La probabilité que deux registres soient altérés simultanément est très faible, même au regard des normes aéronautiques. Ainsi, si les deux premiers registres ont la même valeur et le troisième registre une valeur différente, le vote majoritaire retient automatiquement la valeur commune des deux premiers registres.

Une boucle d'autocorrection met périodiquement et automatiquement à jour les trois registres avec le résultat du vote majoritaire afin d'éviter l'accumulation dans le temps des altérations. La cadence de cette boucle est imposée par une horloge non représentée sur les figures. Si une bascule est altérée à un instant donné, le résultat du vote majoritaire reste inchangé donc correct et au front d'horloge suivant, la bascule altérée est corrigée. Cette boucle correspond à la flèche BAC sur les figures 1 et 2.

La triplication fonctionne bit par bit. Si, par exemple, le registre comporte 16 bits, le dispositif comporte 16 mécanismes indépendants à triplication tels que décrit par les figures 1 et 2.

Les registres REG. 1, REG. 2 et REG. 3 comprennent un ou plusieurs bits. Tous les bits sont traités individuellement, indépendamment et de la même façon.

L'intérêt majeur de la triplication est que ce principe garantit qu'il n'y a jamais de donnée erronée en sortie du registre, même de manière transitoire.

Le mécanisme d'autocorrection cohabite avec le chemin qui permet d'écrire la valeur fonctionnelle VF du registre comme on le voit sur la figure 2. Un signal interne permet de choisir entre cette écriture fonctionnelle et l'autocorrection.

En général, l'écriture fonctionnelle est un évènement sporadique, et pendant le reste du temps, c'est l'autocorrection qui écrit dans les registres.

Lorsqu'une écriture fonctionnelle a lieu, la donnée fonctionnelle est écrite simultanément dans les trois registres. Le reste du temps, la sortie du vote majoritaire est écrite en permanence, à chaque front d'horloge simultanément dans les trois registres par le rebouclage de l'autocorrection.

US 2004/124876 A1 divulgue un registre à triplication connu.

Sur la figure 2, les multiplexeurs sont toujours tous les trois dans le même état, c'est-à-dire les trois sont configurés pour effectuer l'écriture fonctionnelle ou pour prendre en compte l'autocorrection.

Ce type de dispositif peut être implanté dans un composant de type « FPGA », signifiant « Field-Programmable Gate Array » ou « Réseau de Portes Programmables ». La conception de ce système, par souci de simplicité de l'implémentation dans un FPGA par exemple, est basé sur le fait que les registres REG 1, REG 2 et REG 3 ne sont accessibles qu'en écriture. Seule la valeur corrigée, après le vote majoritaire, est accessible en lecture. L'accès en lecture de chaque registre augmenterait drastiquement leur complexité.

Par conséquent, ce système est déjà sécurisé. L'objet de l'invention est de renforcer encore la sécurisation en dotant ce système de capacités de tests aptes à contrôler le bon fonctionnement de l'écriture dans les registres, du système à vote majoritaire ainsi que de l'autocorrection sans avoir besoin de lire chaque registre.

Un objet de l'invention est donc un dispositif à registres dit à triplication comportant un premier registre, un second registre et un troisième registre, les trois registres étant identiques et comportant la même information en utilisation courante, un dispositif de vote majoritaire et un dispositif d'autocorrection, la correction étant fonction du résultat du dispositif de vote majoritaire, chaque registre étant commandé par la sortie d'un multiplexeur à deux entrées, la première entrée correspondant à une écriture fonctionnelle, la seconde entrée correspondant au résultat du vote majoritaire, caractérisé en ce que le dispositif à triplication comporte un dispositif de test dont la fonction est d'inhiber sur commande et de façon indépendante soit l'écriture fonctionnelle dans le premier registre, soit l'écriture fonctionnelle dans le second registre, soit l'écriture fonctionnelle dans le troisième registre, soit l'autocorrection.

Avantageusement, le dispositif de test comporte un registre de contrôle comportant au moins quatre bits de commande, le premier bit commandant l'inhibition de l'écriture fonctionnelle dans le premier registre, le second bit commandant l'inhibition de l'écriture fonctionnelle dans le second registre, le troisième bit commandant l'inhibition de l'écriture fonctionnelle dans le troisième registre et le quatrième bit commandant l'inhibition de l'autocorrection.

Avantageusement, chaque bit de commande du registre de contrôle inhibe l'ensemble des bits du registre associé audit bit de commande.

Avantageusement, une première configuration de test consiste à inhiber uniquement l'autocorrection de façon à vérifier que les trois registres fonctionnent nominalement.

Avantageusement, une seconde configuration de test consiste à inhiber uniquement l'écriture dans le premier registre et le second registre ou l'écriture dans le premier registre et le troisième registre ou l'écriture dans le second registre et le troisième registre de façon à vérifier que le dispositif de vote majoritaire fonctionne nominalement.

Avantageusement, un test comporte une succession de premières, de secondes ou de troisièmes configurations prises dans cet ordre ou dans un ordre différent.

Avantageusement, le registre de commande comporte seize bits et le dispositif de test comporte un ensemble de quatre dispositifs secondaires de vote majoritaire :
- les douze premiers bits étant organisés en trois groupes de quatre bits de commande identiques, chaque dispositif secondaire de vote majoritaire étant pilotés par trois bits de commande appartenant respectivement au premier groupe, au second groupe et au troisième groupe, chaque bit inhibant la même fonction soit d'écriture fonctionnelle, soit d'autocorrection, le résultat du vote majoritaire inhibant ladite fonction,
- les quatre derniers bits étant utilisés pour relire les quatre résultats des quatre dispositifs secondaires de vote majoritaire.

L'invention concerne également un système électronique embarqué sur aéronef soumis à des conditions de vol à haute altitude comportant au moins un dispositif à registres dit à triplication tel que décrit ci-dessus.

D'autres caractéristiques, détails et avantages de l'invention ressortiront à la lecture de la description faite en référence aux dessins annexés donnés à titre d'exemple et qui représentent, respectivement :
Figure 1 une illustration du principe d'un registre à triplication à vote majoritaire selon l'art antérieur ;
Figure 2 une illustration du principe d'un registre à triplication à vote majoritaire selon l'art antérieur comportant le multiplexage avec l'écriture fonctionnelle des registres ;
Figure 3 une illustration du principe d'un registre à triplication à vote majoritaire selon l'invention ;
Figure 4 une illustration de la configuration en mode fonctionnel du registre à triplication selon l'invention ;
Figure 5 une illustration d'une première configuration de test du registre à triplication selon l'invention ;
Figure 6 une illustration d'une seconde configuration de test du registre à triplication selon l'invention ;
Figure 7 une illustration d'une troisième configuration de test du registre à triplication selon l'invention ;
Figure 8 une illustration d'un registre de contrôle du dispositif de test selon l'invention comportant un ensemble de quatre dispositifs secondaires de vote majoritaire.

L'objectif de l'invention, par rapport au fonctionnement actuel d'un registre à triplication est de pouvoir vérifier le bon fonctionnement de tous les éléments du mécanisme de triplication à vote majoritaire de façon à détecter qu'aucune panne latente ne rend inopérant la triplication. Les défauts détectés par le dispositif de test selon l'invention sont les suivants :
- un des trois registres est bloqué à une valeur constante ou est dans l'incapacité d'effectuer une écriture fonctionnelle quand elle se présente ;
- l'auto correction ne fonctionne pas ;
- le vote majoritaire est erroné pour une ou plusieurs combinaisons des valeurs des trois registres.

En aéronautique, les équipements électroniques doivent remplir des exigences strictes de sécurité et de fiabilité. Ces exigences sont régies par une norme appelée RTCA DO-254/Eurocae ED-80 intitulée « Design Assurance Guidance for Airborne Electronic Hardware ». Cette norme définit cinq niveaux de criticité, niveaux dits « DAL », acronyme de « Design Assurance Level ». Le plus sévère est le niveau A qui définit les défauts d'un système susceptible de provoquer un problème catastrophique : sécurité du vol ou atterrissage compromis ou crash de l'avion. Le dispositif selon l'invention est compatible du niveau « DAL A ».

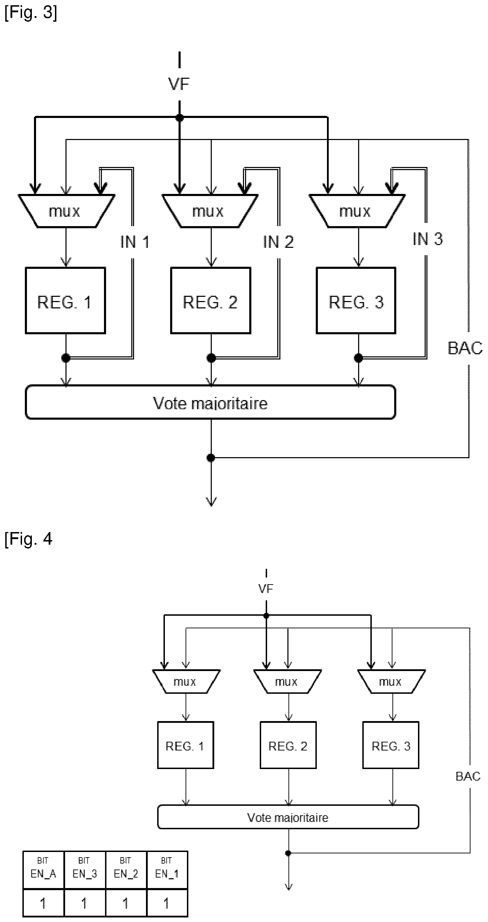

Le principe de l'invention repose sur deux éléments distincts :
La possibilité d'inhiber individuellement les écritures dans chaque registre lors de l'écriture fonctionnelle afin de pouvoir injecter volontairement une valeur différente dans chaque registre et de vérifier le fonctionnement du vote majoritaire et le mécanisme d'autocorrection. Ce processus d'inhibition est représenté sur la figure 3 qui représente un registre à triplication à vote majoritaire comportant trois registres REG. 1, REG. 2 et REG. 3. Il est représenté par trois flèches doubles IN 1, IN 2 et IN 3, chaque flèche inhibant un des trois registres. Cette représentation est purement symbolique.

La possibilité d'inhiber l'autocorrection, ce qui laisse la possibilité d'observer le résultat du vote majoritaire avec des valeurs différentes dans les trois registres.

Un moyen simple de réaliser le dispositif de test est de mettre en oeuvre un registre de contrôle ou de test dédié dont la fonction est de positionner les signaux internes qui vont activer les modes de test de la triplication. Classiquement, ce registre de contrôle du test peut être piloté par le logiciel du système qui commande le registre tripliqué. Mais il peut aussi être piloté par un automate en « hardware » chargé d'effectuer le test intégré de l'équipement, connu sous l'acronyme « BITE » signifiant « Built-In Test Equipment ».

Dans sa version de base, le registre de test contient 4 bits de contrôle : trois bits notés EN_1, EN_2, EN_3 et un bit noté EN_AUTOCORRECT, dont les effets sont les suivants :
Si le bit EN_1 est à 1, alors l'écriture fonctionnelle écrit dans le registre REG 1. Cela revient à conserver le fonctionnement normal du registre.
Si le bit EN_1 est à 0, alors l'écriture fonctionnelle n'écrit pas dans REG 1, c'est-à-dire que le registre reste inchangé. Le registre est en mode de test.
Les bits EN_2 et EN_3 ont le même fonctionnement vis-à-vis des deux registres REG 2 et REG 3 respectivement.
Si le bit EN_AUTOCORRECT est à 1, alors l'autocorrection a lieu normalement sur les trois registres.
Si le bit EN_AUTOCORRECT est à 0, alors l'autocorrection est inhibée sur les trois registres, c'est à dire que seule l'écriture fonctionnelle peut modifier les trois registres.

Il est à noter que le choix du « 1 » ou du « 0 » pour inhiber ou non les fonctions est purement arbitraire.

Les quatre bits et leur action sont complètement indépendants. Chaque bit du registre de contrôle agit collectivement sur tous les bits des registres REG 1, REG 2 et REG 3. Par exemple, si REG 1, REG 2 et REG 3 sont des registres 16-bit, il n'y a qu'un seul bit EN_1 dans le registre de contrôle, et il agit collectivement et de la même façon sur les 16 bits de REG 1.

Pour bien comprendre l'action du registre de contrôle, les figures 4, 5, 6 et 7 représentent différentes configurations en mode fonctionnel et en mode test du registre tripliqué avec, dans un cartouche, l'indication de la valeur des quatre bits du registre de contrôle.

Dans la configuration de fonctionnement normal représentée en figure 4, les quatre bits du registre de test sont à 1. L'écriture fonctionnelle a lieu normalement dans les trois registres, et en dehors des écritures fonctionnelles, l'autocorrection écrit en permanence dans les trois registres.

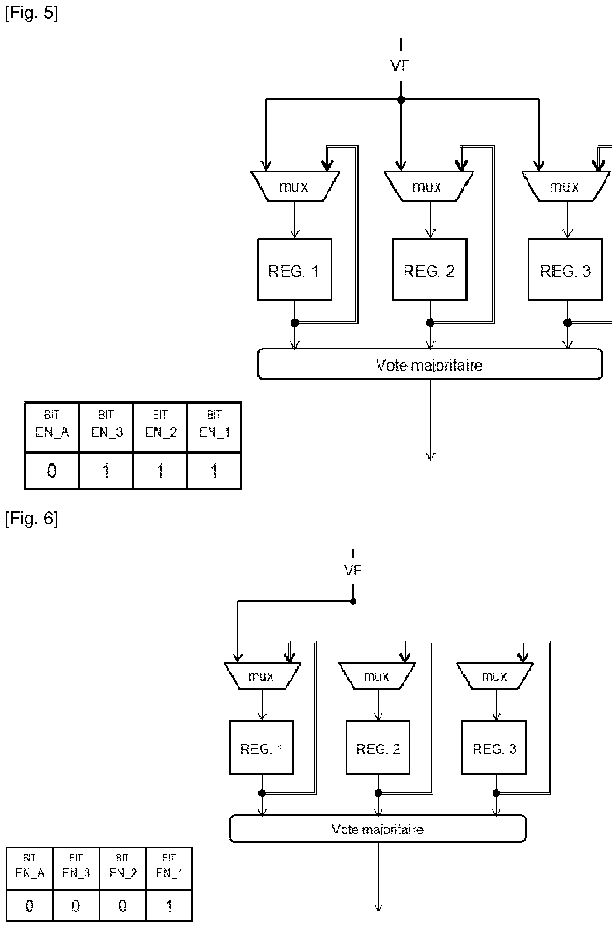

Dans la première configuration de test représentée en figure 5, le bit EN_AUTOCORRECT est à 0, les trois autres bits sont à 1. L'écriture fonctionnelle a lieu normalement dans les trois registres, mais en dehors des écritures fonctionnelles, les registres restent inchangés car l'autocorrection est inhibée. Ce cas permet de vérifier que le résultat du vote est cohérent avec la chaine d'écriture fonctionnelle.

Dans la seconde configuration de test représentée en figure 6, le bit EN_1 est à 1, les trois autres bits sont à 0. L'écriture fonctionnelle a lieu normalement mais uniquement dans le registre REG 1, et en dehors des écritures fonctionnelles, le registre REG 1 reste inchangé. Les registres REG 2 et REG 3 ne sont plus adressés et restent toujours inchangés. Ce cas permet de vérifier le bon fonctionnement du vote majoritaire grâce à la modification de la valeur d'un seul registre.

En alternant les valeurs des bits de EN_1, EN_2 et EN_3, on écrit individuellement chaque registre et on teste le vote majoritaire avec toutes ses combinaisons d'entrée. On vérifie en même temps que l'écriture dans chacun des registres se passe correctement, c'est-à-dire qu'aucun des trois registres n'est collé à une valeur constante.

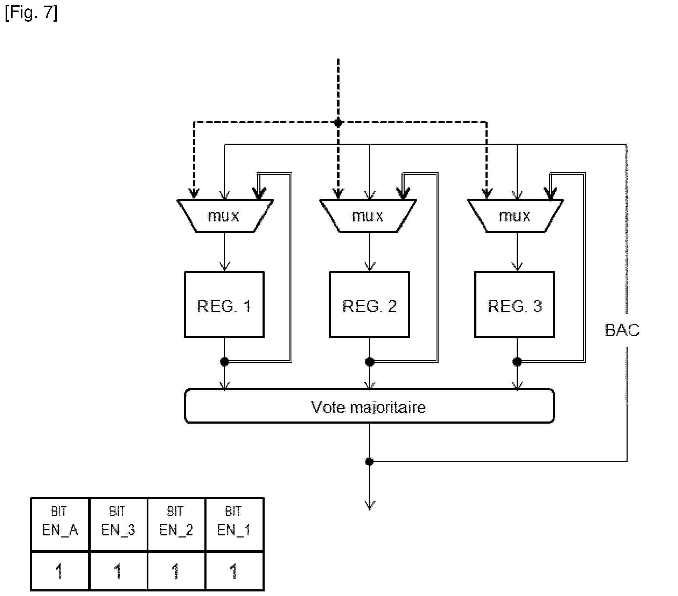

Dans la troisième configuration de test représentée en figure 7, les quatre bits du registre de test sont à 1. L'écriture fonctionnelle est possible normalement mais elle n'est pas utilisée. Les trois registres sont écrits en permanence par l'autocorrection. Ce cas permet de vérifier le bon fonctionnement de l'autocorrection quand elle est appliquée après avoir écrit des valeurs différentes dans les trois registres.

Il est, bien entendu, possible de combiner les configurations précédentes. A titre de premier exemple, si après avoir utilisé trois secondes configurations pour placer des valeurs différentes dans les trois registres, on positionne la troisième configuration, alors les trois registres deviennent identiques, compte-tenu du vote majoritaire qui conduit nécessairement à des valeurs identiques.

Un second exemple plus complexe de combinaisons permet de réaliser des tests plus sophistiqués. Pour la clarté, cet exemple est décomposé en deux étapes successives.

Dans une première étape, en utilisant trois fois la première configuration pour écrire la combinaison « 0, 0, 1 » dans les registres REG 1, REG 2 et REG 3, la relecture du vote majoritaire donne 0. On écrit alors 1 en REG 2, ce qui donne la combinaison « 0, 1, 1 », la relecture du vote majoritaire donne alors 1.

Dans une seconde étape, en utilisant trois fois la première configuration pour écrire la combinaison « 0, 0, 1 » dans les registres REG 1, REG 2 et REG 3, la relecture du vote majoritaire donne 0. On utilise alors la seconde configuration. Si l'autocorrection fonctionne correctement, on passe à la combinaison « 0, 0, 0 ». On utilise de nouveau la première configuration. On écrit 1 dans REG 2, ce qui donne cette fois la combinaison « 0, 1, 0 », la relecture du vote majoritaire donne 0 cette fois.

Ainsi, à la fin de la seconde étape, le résultat du vote majoritaire est différent de ce qu'il est à la fin de la première étape. On vérifie ainsi que l'autocorrection a fonctionné dans le registre REG 3 pour le passage de 1 à 0.

En répétant la seconde étape avec différentes combinaisons possibles, on vérifie que l'autocorrection fonctionne pour les trois registres avec les deux transitions 1 à 0 et 0 à 1.

Comme on vient de le voir, le dispositif de test à inhibitions selon l'invention permet de vérifier simplement que l'ensemble des opérations d'écriture, de vote majoritaire et d'autocorrection fonctionnent correctement. Cependant, il est possible d'augmenter encore la sécurisation du registre à triplication en sécurisant le registre de contrôle et de test.

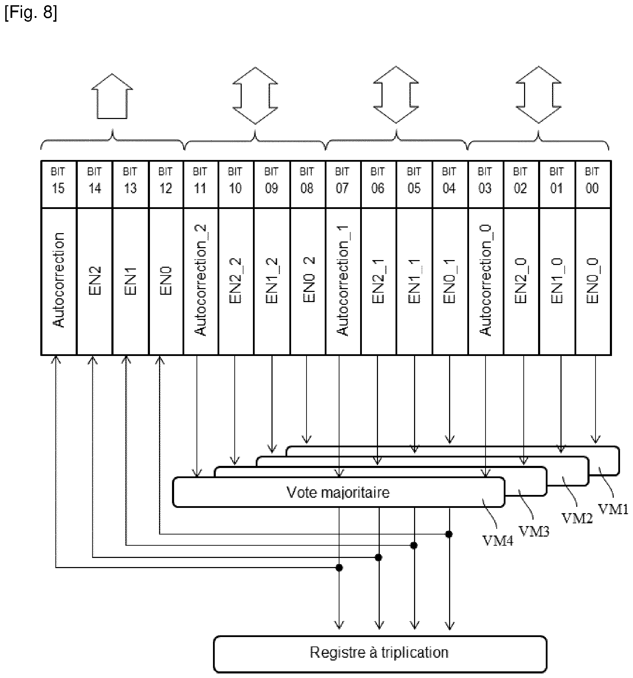

A cette fin, on utilise également la triplication mais appliquée, cette fois, au registre de contrôle lui-même. Ce registre de contrôle sécurisé est représenté en figure 8. Il comporte 16 bits numérotés de 0 à 15 et répartis de la façon suivante.

Les quatre bits de contrôle EN_1, EN_2, EN_3, et EN_AUTOCORRECT sont tripliqués, ce qui fait donc un total de 12 bits. Ils correspondent aux bits numérotés de 0 à 11 sur la figure 8. Les trois instances des quatre bits sont écrites individuellement dans le registre de contrôle. Contrairement aux registres testés REG 1, REG 2 et REG 3, pour des besoins de test, ce registre de contrôle est accessible en lecture et écriture par le logiciel du système qui commande le registre tripliqué ou par un logiciel dédié. Sur la figure 8, la lecture-écriture des bits est symbolisée par une flèche double et la lecture simple des bits par une flèche à sens unique.

Le dispositif de test comporte un ensemble de quatre dispositifs secondaires de vote majoritaire notés VM1, VM2, VM3 et VM4 sur la figure 8. Chaque dispositif secondaire de vote majoritaire est piloté par trois bits de commande répliqués, c'est-à-dire censé contenir la même information de commande.

Les résultats des quatre votes majoritaires commandent le registre à triplication et sont rangés également dans le registre de contrôle. Quatre bits supplémentaires sont donc nécessaires. Ce sont les bits numérotés de 12 à 15 sur la figure 8. Ces bits ne sont accessibles qu'en lecture. Au total, 16 bits sont donc nécessaires pour obtenir la triplication du registre de contrôle.

Par principe même, un seul registre de contrôle peut être associé à plusieurs registres fonctionnels tripliqués, sans limitation du nombre de registres à contrôler.

Le registre de contrôle tripliqué ne possède pas d'autocorrection, ce qui facilite grandement son test. L'absence d'autocorrection du registre d'autocorrection n'a pas d'effet significatif pour les deux raisons détaillées ci-dessous.

La première raison est qu'il est nécessaire d'avoir deux altérations bien placées pour qu'un contrôle soit altéré, ce qui est un événement exceptionnellement rare.

La seconde raison est que l'altération d'un bit de contrôle n'a pas d'impact immédiat, il faut ensuite que le registre fonctionnel soit lui aussi altéré après le registre de contrôle pour qu'il y ait un impact fonctionnel. Là encore, il ne peut s'agir que d'événements très exceptionnels.

Si le bit de contrôle de l'autocorrection est altéré, il est alors nécessaire que deux bits bien placés dans le registre fonctionnel soient altérés après l'altération du registre de contrôle. Il peut s'agir, par exemple, de deux des trois registres de triplication associés au même bit fonctionnel.

Si un bit de contrôle fonctionnel de type « EN » est altéré, on dégrade l'écriture fonctionnelle car on écrit potentiellement un bit faux sur les trois mais le vote majoritaire donne néanmoins la bonne valeur et il est nécessaire qu'il y ait également altération d'un bit du registre fonctionnel pour qu'il y ait un impact. Cette situation n'a d'impact que si les évènements se produisent dans l'ordre suivant : double altération du contrôle puis écriture fonctionnelle avec valeur différente de la valeur précédente sur le bit concerné puis double altération sur les registres tripliqués de ce bit. Cette situation est hautement improbable.

Par conséquent, l'absence d'autocorrection sur le registre de contrôle n'entraine pas de risque conséquent.

Un premier exemple de chaînes d'événements qui seraient susceptibles de provoquer une altération significative du registre est décrit ci-dessous :
Premier événement : le bit EN0_0 est altéré. Grâce au vote majoritaire, il n'y a aucun impact.

Deuxième événement : l'un des deux bits EN0_1 ou EN0_2 est également altéré. Le registre REG 1 ne sera pas mis à jour lors de la prochaine écriture. Mais la valeur actuelle de REG 1 n'est pas modifiée donc il n'y a pas d'impact fonctionnel. Ensuite, lors de la prochaine écriture fonctionnelle, le registre REG 1 n'est pas écrit et il est donc potentiellement différent de Reg 2 et Reg 3. Mais grâce au vote majoritaire, il n'y a toujours pas d'impact fonctionnel. Au cycle d'horloge suivant, l'autocorrection va mettre à jour le registre REG 1 avec la bonne valeur. La bonne valeur écrite apparait dans REG 1 avec simplement une période d'horloge de retard.

Troisième événement : Un des registres REG 2 ou REG 3 est altéré exactement pendant la période d'horloge qui suit l'écriture fonctionnelle. On a alors un impact fonctionnel.

On comprend que la cascade des trois événements est hautement improbable et peut être négligée. L'absence d'autocorrection sur les bits EN ne constitue donc pas un risque.

Un second exemple de chaînes d'événements qui seraient susceptibles de provoquer une altération significative du registre est décrit ci-dessous :
Premier évènement : le bit AUTOCORRECT_0 est altéré. Grâce au vote majoritaire, il n'y a aucun impact.

Deuxième événement : l'un des deux bits AUTOCORRECT_1 ou AUTOCORRECT_2 est altéré. L'autocorrection des registres REG 1, REG 2 et REG 3 est inhibée, mais la valeur actuelle des registres n'est pas modifiée. Il n'y a pas d'impact fonctionnel.

Troisième événement : l'un des trois registres REG1, REG 2 ou REG 3 est altéré. Grâce au vote majoritaire, il n'y a toujours pas d'impact fonctionnel.

Quatrième événement : Un autre des trois registres REG1, REG 2 ou REG 3 est à son tour altéré. Un impact fonctionnel apparaît.

On voit donc que même si deux bits des trois bits AUTOCORRECT 0, AUTOCORRECT 1 ou AUTOCORRECT 2 sont altérés, la probabilité qu'il y ait une conséquence fonctionnelle est extrêmement faible et nécessite l'apparition de quatre évènements successifs, ayant eux-mêmes une probabilité faible.

L'absence d'autocorrection sur les bits AUTOCORRECT ne constitue donc pas un risque.

Pour tester que le triplication des bits de contrôle et leur vote majoritaire fonctionne correctement, il suffit simplement d'écrire toutes les combinaisons des douze bits de contrôle et à chaque fois de relire les quatre bit du vote majoritaire. Cette procédure couvre à la fois le vote majoritaire et les bits de contrôle eux-mêmes. Ce test permet de détecter que l'un des bits est figé à 0 ou 1 à cause d'une panne de l'électronique.

Le dispositif à registres dit à triplication selon l'invention a un niveau de sécurité suffisant pour un système avionique certifié DAL A. Il présente les avantages suivants.

Le dispositif permet de tester 100% du mécanisme de correction d'erreur ou de panne. La couverture de test du mécanisme de correction est totalement exhaustive.

Une panne simple ou une altération simple du dispositif de test ne provoque pas de données fonctionnelles erronées. Une telle panne simple du dispositif de test peut être détectée avant qu'une panne multiple ne survienne.

Le dispositif de test n'a aucun impact sur les performances opérationnelles du registre testé.

Le dispositif de test associé à chaque registre fonctionnel est très simple à mettre en oeuvre, ne dégrade donc pas la fiabilité et consomme peu de ressources du composant électronique qui le porte.

Le registre de contrôle selon l'invention peut être mutualisé avec autant de registres fonctionnels qu'on le souhaite, ce qui minimise le nombre de registres de contrôle.

## Revendications

1. Dispositif à registres dit à triplication comportant un premier registre (REG. 1), un second registre (REG. 2) et un troisième registre (REG. 3), les trois registres étant identiques et comportant la même information en utilisation courante, un dispositif de vote majoritaire et un dispositif d'autocorrection (BAC), la correction étant fonction du résultat du dispositif de vote majoritaire, chaque registre étant commandé par la sortie d'un multiplexeur (mux) à deux entrées, la première entrée correspondant à une écriture fonctionnelle, la seconde entrée correspondant au résultat du vote majoritaire, le dispositif à registres dit à triplication comporte un dispositif de test et il est **caractérisé en ce que** la fonction du dispositif de test est d'inhiber sur commande et de façon indépendante soit l'écriture fonctionnelle dans le premier registre, soit l'écriture fonctionnelle dans le second registre, soit l'écriture fonctionnelle dans le troisième registre, soit l'autocorrection.

2. Dispositif à registres dit à triplication selon la revendication 1, **caractérisé en ce que** le dispositif de test comporte un registre de contrôle comportant au moins quatre bits de commande (EN_1, EN_2, EN_3, EN_A), le premier bit commandant l'inhibition de l'écriture fonctionnelle dans le premier registre, le second bit commandant l'inhibition de l'écriture fonctionnelle dans le second registre, le troisième bit commandant l'inhibition de l'écriture fonctionnelle dans le troisième registre et le quatrième bit commandant l'inhibition de l'autocorrection.

3. Dispositif à registres dit à triplication selon la revendication 2, **caractérisé en ce que** chaque bit de commande du registre de contrôle inhibe l'ensemble des bits du registre associé audit bit de commande.

4. Dispositif à registres dit à triplication selon la revendication 3, **caractérisé en ce qu'**une première configuration de test consiste à inhiber uniquement l'autocorrection de façon à vérifier que les trois registres fonctionnent nominalement.

5. Dispositif à registres dit à triplication selon la revendication 3, **caractérisé en ce qu'**une seconde configuration de test consiste à inhiber uniquement l'écriture dans le premier registre et le second registre ou l'écriture dans le premier registre et le troisième registre ou l'écriture dans le second registre et le troisième registre de façon à vérifier que le dispositif de vote majoritaire fonctionne nominalement.

6. Dispositif à registres dit à triplication selon l'une des revendications 2 à 5, **caractérisé en ce qu'**un test comporte une succession de premières, de secondes ou de troisièmes configurations prises dans cet ordre ou dans un ordre différent.

7. Dispositif à registres dit à triplication selon l'une des revendications 2 à 6, **caractérisé en ce que** le registre de contrôle comporte seize bits et que le dispositif de test comporte en outre un ensemble de quatre dispositifs secondaires de vote majoritaire (VM1, VM2, VM3, VM4),
les douze premiers bits étant organisés en trois groupes de quatre bits de commande identiques, chaque dispositif secondaire de vote majoritaire étant pilotés par trois bits de commande appartenant respectivement au premier groupe, au second groupe et au troisième groupe, chaque bit inhibant la même fonction soit d'écriture fonctionnelle, soit d'autocorrection, le résultat du vote majoritaire inhibant ladite fonction,
les quatre derniers bits étant utilisés pour relire les quatre résultats des quatre dispositifs secondaires de vote majoritaire.

8. Système électronique embarqué sur aéronef soumis à des conditions de vol à haute altitude comportant au moins un dispositif à registres dit à triplication, **caractérisé en ce que** ledit dispositif à triplication est selon l'une des revendications précédentes.

## Patentansprüche

1. Triplikationsregistervorrichtung, die ein erstes Register (REG. 1), ein zweites Register (REG. 2) und ein drittes Register (REG. 3), wobei die drei Register identisch sind und im laufenden Betrieb die gleiche Information enthalten, eine Mehrheitsentscheidungsvorrichtung und eine Autokorrekturvorrichtung (BAC) umfasst, wobei die Korrektur vom Ergebnis der Mehrheitsentscheidungsvorrichtung abhängt, wobei jedes Register durch den Ausgang eines Multiplexers (mux) mit zwei Eingängen gesteuert wird, wobei der erste Eingang einem Funktionsschreibvorgang entspricht, der zweite Eingang dem Ergebnis der Mehrheitsentscheidung entspricht, wobei die Triplikationsvorrichtung eine Testvorrichtung umfasst und **dadurch gekennzeichnet ist, dass** die Funktion der Testvorrichtung darin besteht, auf Befehl und unabhängig entweder den Funktionsschreibvorgang in das erste Register, den Funktionsschreibvorgang in das zweite Register, den Funktionsschreibvorgang in das dritten Register oder die Autokorrektur zu sperren.

2. Triplikationsregistervorrichtung nach Anspruch 1, **dadurch gekennzeichnet, dass** die Testvorrichtung ein Steuerregister mit mindestens vier Steuerbits (EN_1, EN_2, EN_3, EN_A) aufweist, wobei das erste Bit die Sperrung des Funktionsschreibvorgangs in das erste Register steuert, das zweite Bit die Sperrung des Funktionsschreibvorgangs in das zweite Register steuert, das dritte Bit die Sperrung des Funktionsschreibvorgangs in das dritte Register steuert und das vierte Bit die Sperrung der Autokorrektur steuert.

3. Triplikationsregistervorrichtung nach Anspruch 2, **dadurch gekennzeichnet, dass** jedes Steuerbit des Steuerregisters alle Bits des mit dem Steuerbit assoziierten Registers sperrt.

4. Triplikationsregistervorrichtung nach Anspruch 3, **dadurch gekennzeichnet, dass** eine erste Testkonfiguration darin besteht, nur die Autokorrektur zu sperren, um zu überprüfen, dass die drei Register nominell funktionieren.

5. Triplikationsregistervorrichtung nach Anspruch 3, **dadurch gekennzeichnet, dass** eine zweite Testkonfiguration darin besteht, nur den Schreibvorgang in das erste Register und das zweite Register oder den Schreibvorgang in das erste Register und das dritte Register oder den Schreibvorgang in das zweite Register und das dritte Register zu sperren, um zu überprüfen, dass die Mehrheitsentscheidungsvorrichtung nominell funktioniert.

6. Triplikationsregistervorrichtung nach einem der Ansprüche 2 bis 5, **dadurch gekennzeichnet, dass** ein Test eine Folge von ersten, zweiten oder dritten Konfigurationen umfasst, die in dieser oder einer anderen Reihenfolge genommen werden.

7. Triplikationsregistervorrichtung nach einem der Ansprüche 2 bis 6, **dadurch gekennzeichnet, dass** das Steuerregister sechzehn Bits aufweist und dass die Testvorrichtung ferner einen Satz von vier sekundären Mehrheitsentscheidungsvorrichtungen (VM1, VM2, VM3, VM4) aufweist,
wobei die ersten zwölf Bits in drei Gruppen von vier identischen Steuerbits organisiert sind, jede sekundäre Mehrheitsentscheidungsvorrichtung durch drei Steuerbits gesteuert wird, die jeweils zur ersten Gruppe, zur zweiten Gruppe und zur dritten Gruppe gehören, wobei jedes Bit die gleiche Funktion, entweder den Funktionsschreibvorgang oder die Autokorrektur, sperrt, wobei das Ergebnis der Mehrheitsentscheidung die Funktion sperrt,
wobei die letzten vier Bits zum erneuten Lesen der vier Ergebnisse der vier sekundären Mehrheitsentscheidungsvorrichtungen verwendet werden.

8. Elektronisches System an Bord eines Luftfahrzeugs, das Höhenflugbedingungen ausgesetzt ist, das mindestens eine Triplikationsregistervorrichtung umfasst, **dadurch gekennzeichnet, dass** die Triplikationsvorrichtung gemäß einem der vorhergehenden Ansprüche ist.

## Claims

1. A triplication register device comprising a first register (REG. 1), a second register (REG. 2) and a third register (REG. 3), the three registers being identical and containing the same information in common use, a majority vote device and a self-correction device (BAC), the correction being dependent on the result from the majority vote device, each register being controlled by the output of a dual-input multiplexer (mux), the first input corresponding to a functional write operation, the second input corresponding to the result of the majority vote, the triplication device contains a test device and is **characterised in that** the function of the test device is to block, on command and independently, either the functional write operation to the first register, or the functional write operation to the second register, or the functional write operation to the third register, or the self-correction.

2. The triplication register device according to claim 1, **characterised in that** the test device contains a control register containing at least four control bits (EN_1, EN_2, EN_3, EN_A), the first bit controlling the blocking of the functional write operation to the first register, the second bit controlling the blocking of the functional write operation to the second register, the third bit controlling the blocking of the functional write operation to the third register and the fourth bit controlling the blocking of the self-correction.

3. The triplication register device according to claim 2, **characterised in that** each control bit of the control register blocks all of the bits of the register associated with said control bit.

4. The triplication register device according to claim 3, **characterised in that** a first test configuration consists in blocking only the self-correction so as to check that the three registers are operating in a nominal manner.

5. The triplication register device according to claim 3, **characterised in that** a second test configuration consists in blocking only the write operation to the first register and the second register or the write operation to the first register and the third register or the write operation to the second register and the third register so as to check that the majority vote device is operating in a nominal manner.

6. The triplication register device according to one of claims 2 to 5, **characterised in that** a test contains a sequence of first, second or third configurations taken in this order or in a different order.

7. The triplication register device according to one of claims 2 to 6, **characterised in that** the control register contains sixteen bits and that the test device further contains a set of four secondary majority vote devices (VM1, VM2, VM3, VM4),
the first twelve bits being organised into three groups of four identical control bits, each secondary majority vote device being driven by three control bits belonging respectively to the first group, to the second group and to the third group, each bit blocking the same function, either the functional write operation or the self-correction, the result of the majority vote blocking said function,
the last four bits being used to reread the four results from the four secondary majority vote devices.

8. An electronic system on board an aircraft subject to high-altitude flight conditions, containing at least a triplication register device, **characterised in that** said triplication device is in accordance with one of the preceding claims.
